# EUROPEAN PATENT APPLICATION

(11) **EP 4 513 305 A1**
(43) Date of publication of application: **26.02.2025**
(21) Application number: 23192535.5
(22) Date of filing: 21.08.2023
(51) Int. Cl.: G06F 3/01

(54) **IMPROVEMENTS IN TOUCHLESS USER INTERFACE POINTER MOVEMENT FOR COMPUTER DEVICES**

(71) Applicant: AMERIA AG, 69124 Heidelberg (DE)
(72) Inventor: METTER, Albrecht, 69120 Heidelberg (DE)
(74) Representative: Best, Bastian

(57) **Abstract**

Disclosed is a touchless user interface control method (300) for a data processing apparatus (102). The data processing apparatus (102) comprises and/or is communicatively coupled to display means (104) The method comprises providing (302) a plurality of touchless pointer operating modes (402), wherein each touchless pointer operating mode (402) determines one or more pointer movement settings. The method comprises determining (304) a free-space finger movement of at least one finger (304) of a user. The method comprises generating (306) at least one control command to cause a pointer movement of a pointer (302) displayed on the display means (104) based on the finger movement. A relationship between the finger movement and the pointer movement is determined by a current touchless pointer operating mode (402) of the plurality of touchless pointer operating modes (402).

## Description

### TECHNICAL FIELD

The present disclosure generally relates to the field of human-computer interaction, and more specifically to techniques for improved touchless control of a display pointer.

### BACKGROUND

Computer devices have become an essential part of our daily lives. Besides stationary computers, such as personal computers or server computers, one type of computer device includes portable computers also known as laptops or notebooks which provide the user with a convenient way to work, communicate, and entertain themselves on the go. Other types of computer devices which are ubiquitous in modern life include mobile devices such as touchscreen-based handheld devices like smartphones and tablets. Another example are entertainment devices such as gaming consoles. Furthermore, various other types of technical devices are becoming more and more computerized, e.g., cars and industrial machines.

However, the ways how users interact with computer devices have remained more or less static, and so are the use cases in which these devices are employed nowadays. One reason is because these devices and interaction mechanisms are primarily based on the available hardware. Typical computers follow a one-size-fits-all approach, making every application, every use case, and the ways to interact essentially the same and limited to the limits that the hardware allows. The keyboard stays a keyboard, the trackpad stays a trackpad, and the buttons remain buttons. As a result, the interaction is fully comfortable only in a limited number of use cases. At the same time, the interaction is often not particularly ergonomic, often more time-consuming than it would need to be, and in many cases not as precise as it could be.

To address some of these limitations, efforts have been taken to provide touchless user interfaces for computer devices. For example, WO 2014/113454 A1 assigned to Leap Motion, Inc. discloses techniques for dynamic free-space user interactions for machine control. The system described in this document interprets the position, configuration or motion of control objects, such as a user's hand(s) or finger(s), in free space within a field of view of an image capture device. In some embodiments disclosed in WO 2014/113454 A1, the gesture-recognition system provides functionality for the user to statically or dynamically adjust the relationship between the user's actual motion and an object movement displayed on the electronic device's screen. In static operation, the user manually sets this sensitivity level by manipulating a displayed slide switch or other icon. In dynamic operation, the system automatically responds to the distance between the user and the device.

However, it has turned out to be quite difficult to adjust the pointer behavior, such as the relationship between the user's motion and the motion of the pointer, in such a way that touchless user interface control is both intuitive and accurate over a multitude of usage scenarios. This is because different usage scenarios may have quite different requirements on the pointer behavior in terms of precision, user convenience, or other factors.

It is therefore an objective of the present disclosure to provide a touchless user interface control method which is more versatile and further improves the human-computer interaction and the user experience, thereby overcoming the above-mentioned disadvantages of the prior art at least in part.

### SUMMARY OF THE DISCLOSURE

The objective is solved by the subject-matter defined in the independent claims. Advantageous modifications of embodiments of the present disclosure are defined in the dependent claims as well as in the description and the figures.

As a general overview, certain aspects of the present disclose provide unique improvements in touchless gesture control. The disclosed techniques serve to provide a highly satisfying immersive user experience by enabling a particularly user-friendly and intuitive, and yet robust and precise handling in a plethora of areas of application, including without limitation consumer products, industry, gastronomy, the public sector, healthcare and the automotive industry. The disclosed techniques are generally applicable to screens of all sizes, from smartphones and tablets to laptop displays, computer monitors and TVs, and even LED walls or large-scale projections.

One aspect of the present disclosure relates to a touchless user interface control method for a data processing apparatus. The method may be computer-implemented. The data processing apparatus may comprise and/or may be communicatively coupled to display means. The method may comprise a step of providing a plurality of touchless pointer operating modes. Each touchless pointer operating mode may determine one or more pointer movement settings. The method may comprise a step of determining a free-space finger movement of at least one finger of a user, preferably of the fingertip of the at least one finger. The at least one finger may be an index finger. The method may comprise a step of generating at least one control command. The at least one control command may be configured to cause a pointer movement of a pointer displayed on the display means. The caused pointer movement may be based on, or relative to, the finger movement.

According to one aspect of the present disclosure, a relationship between the finger movement and the pointer movement is determined by a current touchless pointer operating mode of the plurality of touchless pointer operating modes. In other words, the method may provide multiple touchless pointer operating modes, and the method may cause the data processing apparatus to enter a selected one of the plurality of touchless pointer operating modes (the current mode) and/or switch between the plurality of touchless pointer operating modes.

A touchless pointer operating mode should be understood as a mode which enables the user to operate the pointer in a particular way using touchless user inputs, in particular free-space finger movements. In other words, a touchless pointer operating mode may provide a distinct pointer behavior. The plurality of touchless pointer operating modes may be predetermined, i.e., at least some settings and/or characteristics thereof are predetermined or predefined. More precisely, a default value of a setting and/or characteristic may be predefined, while the value may still be adjustable by the user.

According to another aspect of the present disclosure, each touchless pointer operating mode may determine one or more pointer movement settings. A pointer movement setting should be understood as any characteristic which influences how the pointer moves. Examples will be provided further below. At least two of the touchless pointer operating modes may differ in at least one pointer movement setting. As mentioned above, in each touchless pointer operating mode, at least some of the pointer movement settings may be predetermined. As a result, each of the plurality of touchless pointer operating modes may be configured to provide a specific pointer behavior which may differ from the other touchless pointer operating modes in the one or more pointer movement settings.

This way, the method may cause the data processing apparatus to quickly and/or seamlessly exhibit different pointer behaviors and therefore different way to control and interact with the data processing apparatus, depending on the current touchless pointer operating mode. Each touchless pointer operating mode and thus pointer behavior may be optimized for a particular situation and/or usage scenario. Upon selection of and/or entry of and/or switching to of a particular touchless pointer operating mode, the one or more pointer movement settings determined by the touchless pointer operating mode may be quickly applied. This is beneficial already if a touchless pointer operating mode determines only one pointer movement setting because one such setting may be sufficient to provide a certain pointer behavior. When a touchless pointer operating mode determines multiple pointer movement settings, it is even possible to quickly switch between complex sets of settings just by selecting the particular touchless pointer operating mode instead of having to adjust each setting individually. The system disclosed in WO 2014/113454 A1, by contrast, does not have such a plurality of touchless pointer operating modes. Rather, the document deals only with the relationship between the user's actual motion and an object movement displayed on the electronic device's screen, and this relationship needs to be adjusted (by the user or the system) individually every time a different sensitivity is desired. Such a reactive adjustment strategy, however, may be cumbersome for the user and prone to errors and misconfigurations.

According to another aspect of the present disclosure, the at least one pointer movement setting may comprise a pointer sensitivity. The pointer sensitivity may determine at least one factor of the relationship between the finger movement and the pointer movement, in particular the relationship between a leftward, rightward, upward and/or downward finger movement and a leftward, rightward, upward and/or downward pointer movement. In the present disclosure, a leftward or rightward movement (of the finger or the pointer) may also be referred to as a movement in x-direction, while an upward or a downward movement (of the finger or the pointer) may also be referred to as a movement in y-direction. A finger movement in a direction intersecting a plane formed by the x- and y-directions, such as a finger movement towards the display means or away from the display means (which might be angled to a certain degree with respect to the display means), may also be referred to as a movement in z-direction. A finger movement in z-direction may not have a direct correspondence as regards the pointer movement (at least when using a two-dimensional display means).

According to another aspect of the present disclosure, the plurality of touchless pointer operating modes may comprise at least one touchless pointer operating mode in which the pointer sensitivity is static, i.e., it remains at a fixed value as long as the touchless pointer operating mode is applied (or until the sensitivity is changed or adjusted, e.g., by the user). Additionally or alternatively, the pointer sensitivity may be independent of a distance between the finger and the display means, i.e., independent of a finger movement in z-direction.

Accordingly, the pointer sensitivity may remain the same regardless of how near or far the user holds the finger in front of the display means, and/or regardless of whether the user changes the distance between the finger and the display means. Such a touchless pointer operating mode may be particularly suitable when a comparatively low or normal degree of pointer precision is sufficient, as well as for beginner users who have little experience with touchless user interface control and free-space gestures, and who could be confused by a more complex control mode.

According to another aspect of the present disclosure, the plurality of touchless pointer operating modes may comprise a first pointer operating mode, which will also be referred to as "Point and Click" mode, in which the pointer sensitivity is such that the finger movement causes an essentially equal pointer movement. In other words, the relationship between the finger movement and the pointer movement may be essentially 1-to-1 ("essentially" taking account of inevitable measurement inaccuracies), preferably exactly 1-to-1 (or in short: 1). Accordingly, the pointer movement simply follows the finger movement as the user moves the finger in free space in front of the display means. The first pointer operating mode may comprise projecting a finger position of the finger perpendicularly onto a pointer position of the pointer. In the first pointer operating mode, the pointer sensitivity may be static and/or independent of a distance between the finger and the display means, as already described above.

The inventors have found out that the first pointer operating mode ("Point and Click") may be particularly suitable for media consumption, e.g., watching a video, listening to music, or the like, for doing presentations, for playing games, and/or for applications for children.

In the first pointer operating mode, it may be particularly easy for the user to move the pointer to a specific position on the display means, e.g., over a user interface element such as a button the user wants to click, because the user simply needs to move the finger towards the specific (x, y) position on the display means (without touching the display means, of course). In other words, the pointing gesture precision may be comparatively high in the first pointer operating mode. On the other hand, the user has to move the finger across the entire display means (in the x and y direction), which may be less convenient. For example, the user might have to raise the hand from a supported posture, such as a typing posture or a posture where the hand is resting on a table, or a palmrest when the computing device is a portable computer such as a laptop, to an unsupported posture where the hand is free in the air. When the display means is a large display, e.g., a very large electronic screen or a projection surface, it may be even more difficult or even impossible to reach every part of the display means, especially the corners.

According to another aspect of the present disclosure, the plurality of touchless pointer operating modes comprises a second pointer operating mode, which will also be referred to as "No Proximity" mode, in which the pointer sensitivity is such that the finger movement causes a pointer movement which is greater than the finger movement. In other words, the relationship between the finger movement and the pointer movement may be essentially f-to*p* ("essentially" taking account of inevitable measurement inaccuracies), with *f* < *p*. As a non-limiting example, when the finger moves 1 cm to the right (*f*), the pointer may move 1.3 cm to the right (*p*) and the relationship would be 1-to-1.3 (or in short: 1.3). In the second pointer operating mode, the pointer sensitivity may be static and/or independent of a distance between the finger and the display means, as already described above.

The inventors have found out that the second pointer operating mode ("No Proximity") may be particularly suitable for beginner users to learn how to use touchless user interface control and free-space gestures.

The second pointer operating mode may also be particularly ergonomic. For example, the user may keep the hand in a supported posture, such as a typing posture or a posture where the hand is resting on a table, or a palmrest when the computing device is a portable computer such as a laptop. This is because a relatively small finger movement can cause a pointer movement sufficient to reach a predominant portion, or even the entire area, of the display means. When the display means is a large display, e.g., a very large electronic screen or a projection surface, it may be particularly easy to reach every part of the display means, especially the corners, as opposed in the first touchless pointer operating mode ("Point to Click"). On the other hand, the user may not be able to operate the pointer as precisely.

According to another aspect of the present disclosure, the plurality of touchless pointer operating modes may comprise at least one touchless pointer operating mode in which the pointer sensitivity is dynamic and/or can change. The pointer sensitivity may change based on a distance between the finger and the display means. Accordingly, such a touchless pointer operating mode may allow the user to flexibly and efficiently control the pointer sensitivity depending on the user's current needs. For example, the user may operate the finger in a default posture to control the pointer in x- and y-direction with a default sensitivity. When the user desires a different sensitivity, the user may simply move the finger in z-direction, such as towards the display screen. This gives the user greater control over the user experience and may combine at least some of the advantages of the other touchless pointer operating modes described herein in a single touchless pointer operating mode. As an example, the user may quickly switch between a pointer sensitivity which allows to easily reach the corners of the display means and another pointer sensitivity which allows to precisely select a desired user interface element.

The described aspect also leads to a particularly ergonomic and efficient human-machine interaction. For example, the user may simply straighten the finger (or fingertip) or by may slightly move the hand forward while it is resting on a tabletop or palmrest region of a portable computing device to change the pointer sensitivity.

According to another aspect of the present disclosure, the pointer sensitivity may change between a plurality of pointer sensitivities. As one example, the pointer sensitivity may change in a predetermined relationship with the distance between the finger and the display means, such as continuously. As another example, the plurality of pointer sensitivities may comprise any number of, potentially predefined and/or discrete, pointer sensitivities. Accordingly, this gives the user great control over the user experience.

According to another aspect of the present disclosure, the plurality of pointer sensitivities may comprise, or consist of, a first (potentially predefined and/or discrete) pointer sensitivity and a second (potentially predefined and/or discrete) pointer sensitivity, which is preferably different from the first pointer sensitivity. Accordingly, the different sensitivities may be limited in number to not confuse the user. The inventors have found that two sensitivities for the user to choose from will typically cover most practical use cases.

According to another aspect of the present disclosure, the first pointer sensitivity may apply while the finger movement takes place within a first bounding area. The second sensitivity may apply while the finger movement takes place in a second bounding area. The second bounding area may be arranged between the first bounding area and the display means. The first and or second bounding areas may be three-dimensional bounding areas which may be conceptualized as distinct zones in which the finger movement is observed. Accordingly, the respective sensitivity level applies as long as the user moves the finger in a predetermined range towards the display, which allows for a particularly smooth and predictable user interface control.

According to another aspect of the present disclosure, the pointer sensitivity may change continuously between the first pointer sensitivity and the second sensitivity while the finger movement takes place between the first bounding area and the second bounding area. Accordingly, when the user's finger escapes the first bounding area in z-direction, such as by moving the finger towards the display means, the pointer sensitivity may change continuously (or in another predetermined relation) with the distance between the finger and the display means, until the finger enters the second bounding area, in which the second sensitivity applies. This allows for a particularly smooth transition between the different sensitivities associated with the bounding areas and therefore may create a particularly intuitive and predictable user experience.

According to another aspect of the present disclosure, the first pointer sensitivity may be a default pointer sensitivity level. The second pointer sensitivity may be a special, or non-default, sensitivity usable for special situations, as will become apparent from the following description.

According to another aspect of the present disclosure, the plurality of touchless pointer operating modes may comprise a third pointer operating mode, which will also be referred to as "Precision Push" mode, in which the second pointer sensitivity causes, for a given finger movement, a pointer movement which is greater than a pointer movement according to the first pointer sensitivity for the given finger movement. Accordingly, in one example, the pointer movement operates according to the first pointer sensitivity such that it is easy for the user to precisely select desired user interface elements. However, it may be difficult for the user to reach the corners of the display means. Therefore, the user moves the finger slightly forward and the pointer movement then operates according to the second pointer sensitivity. The second pointer sensitivity is such that it causes a greater pointer movement than the first pointer sensitivity and thus, the user can easily move the pointer to the corners of the display means. When the user brings back the finger to the original distance to the display means, the pointer movement resumes to operate according to the first sensitivity.

According to another aspect of the present disclosure, the plurality of touchless pointer operating modes may comprise a fourth pointer operating mode in which the second pointer sensitivity causes, for a given finger movement, a pointer movement which is smaller than a pointer movement according to the first pointer sensitivity for the given finger movement. Accordingly, this mode can be understood as the opposite to the third mode explained above. In one example, the pointer movement operates according to the first pointer sensitivity such that the user can easily move the pointer to the corners of the display means. However, it may be difficult for the user to precisely hit a desired user interface element. Therefore, the user moves the finger slightly forward and the pointer movement then operates according to the second pointer sensitivity. The second pointer sensitivity is such that it causes a smaller pointer movement than the first pointer sensitivity and thus, it is easy for the user to hit the desired user interface element. When the user brings back the finger to the original distance to the display means, the pointer movement resumes to operate according to the first sensitivity.

According to another aspect of the present disclosure, the one or more pointer movement settings may comprise one or more of the following settings (alternatively or in combination with the above-described pointer sensitivity or pointer sensitivities):

At least one dimension of a first bounding area in which the finger movement can take place, including a width (in x-direction), height (in y-direction) and/or depth (in z-direction) of the first bounding area and/or at least one dimension of a second bounding area in which the finger movement can take place, including a width (in x-direction), height (in y-direction) and/or depth (in z-direction) of the second bounding area and/or a distance between the first bounding area and the second bounding area. By defining the bounding area(s) and their distance, the pointer movement can be exactly fine-tuned to a desired behavior.

Another pointer movement setting may be a pointer pace multiplicator. The pointer pace multiplicator may provide an overall influence on the pointer sensitivity, or on all pointer sensitivities if multiple exist.

Another pointer movement setting may be a yaw angle of a finger movement plane relative to the display means. The finger movement plane should be understood as a plane in which the finger movement essentially takes place when the user moves the finger in x- and/or y-direction. "Essentially" in this case means that in reality, the user's finger may perform a slightly curved movement, e.g., when moving the pointing finger from left to right. The finger movement place may thus be an approximation of the real finger movement. The yaw angle should be understood as an angle that determines a yaw rotation of the finger movement plane relative to the display means. A yaw rotation should be understood as a movement around the yaw axis of a body that changes the direction it is pointing, to the left or right of its direction of motion. In other words, the yaw angle may determine how the finger movement plane is swiveled left or right relative to the display means. This setting may be helpful to adjust the relationship between the finger movement and the pointer movement when the user's finger is pointing at the display means in an angled manner, e.g., as a result of the user's hand position or individual posture.

Another pointer movement setting may be a pitch angle of the finger movement plane relative to the display means. The pitch angle should be understood as an angle that determines a pitch rotation of the finger movement plane relative to the display means. A pitch rotation should be understood as a movement around the pitch axis of a body that changes the direction it is pointing, upward or downward. In other words, the pitch angle may determine how the finger movement plane is tilted forward or backward relative to the display means. This setting may be helpful to adjust the relationship between the finger movement and the pointer movement when the user's finger is held during certain postures, e.g., during a typing posture, such that another part of the user's hand is erroneously detected as input object.

Another pointer movement setting may be an opening angle of the data processing apparatus when the data processing apparatus is a portable computer, such as a laptop. The opening angle typically determines an orientation of the display means relative to a base portion of the computer and therefore relative to the hand position. Therefore, the opening angle can be used to adjust the geometries of the touchless user interface control.

Another pointer movement setting may be a maximum pointer velocity threshold. This setting may serve to filter out very fast finger movements to avoid overly fast jumps of the pointer.

According to another aspect of the present disclosure, the one or more pointer movement settings of at least one of the plurality of touchless pointer operating modes may be adjustable based at least in part on one or more of a user selection and an automatic selection, in particular based at least in part on an observed behavior of the user. This way, one or more, preferably all, touchless pointer operating modes and/or the associated one or more pointer movement settings may be flexibly adjusted.

According to another aspect of the present disclosure, the current touchless pointer operating mode may be selected from the plurality of touchless pointer operating modes based at least in part on one or more of a user selection and an automatic selection. The user selection may be based at least in part on an activation of a user-selectable control element or affordance. The automatic selection may be based at least in part on a position of at least one hand of the user relative to the display means, in particular based at least in part on whether the at least one hand is arranged in front of the display mans without touching the data processing apparatus or whether the at least one hand is in contact with the data processing apparatus.

According to another aspect of the present disclosure, the method may further comprise generating at least one control command to cause a visual indication indicating which of the plurality of touchless pointer operating modes has been selected. Preferably, the visual indication comprises changing the visual appearance of the pointer displayed on the display means. This way, the user can readily understand which touchless pointer operating mode is currently active, which improves the intuitiveness of the touchless gesture control.

According to another aspect of the present disclosure, the method comprises a step of determining a pointer movement characteristic. The pointer movement characteristic may include one or more of a speed of the pointer, an acceleration of the pointer, and a velocity of the pointer. The method may comprise a step of entering a click mode based on the pointer movement characteristic. The method may comprise a step of generating a control command to cause a click event based on a predetermined finger movement.

The speed of the pointer should be understood as the distance traveled by the pointer on the display (i.e., in x- and y-direction) per unit time irrespective of the direction. In other words, here the only magnitude of importance is a scalar quantity. The velocity of the pointer should be understood as referring to the distance traveled per unit time in some specific direction. In other words, both direction and magnitude are essential and are a vector quantity. The acceleration of the pointer should be understood as referring to the rate of change of velocity of the pointer. In other words, both the direction and magnitude are considered as a vector quantity.

The general idea of the above aspect is to add one more dimension, namely one of the above quantities speed, velocity and/or acceleration, into consideration. This additional quantity, possibly in addition to calculated values in the x-, y-, and z-room, may represent a previous behaviour of the user. This may be conceptualized as a kind of short-term memory. This is advantageous, because typically the user slows down before performing a click. When this behavior is observed, the user can be supported in performing a comfortable click without missing the target.

In one possible implementation, the speed (or another one of the quantities mentioned above) of the pointer on the screen is tracked, preferably all the time (e.g., time and distance in the x- and y- dimension of the screen, not the finger movement in the 3D space). When the speed is very low (i.e., below a predetermined threshold), or if the user has stopped moving the cursor altogether, the click mode is entered, or in other words, the click functionality is enabled. In the click mode, the user can move the finger in the direction of the screen, i.e., in z-direction, to initiate a click. Any movement in the z-direction which also involves a movement in x- and/or y- dimension, i.e., a movement in an angled orientation in relation to the screen, will be interpreted as a click attempt as well, and the pointer will not move in x- or y-direction on the screen. In other words, the x- and y-components of the finger movement are filtered out in the click mode. This greatly improves the useability because the user will not miss the user interface element while clicking. When the angle of the finger movement in relation to the screen is greater than a predetermined threshold, however, the finger movement may be interpreted as an attempt of the user to move the pointer again, instead of performing a click, and a switch out of the click mode and back into the pointer movement mode may be performed.

The above implementation of this aspect may involve additional settings (relating to the above-mentioned thresholds): A predefined time period of stopping until the click mode is activated or a speed/velocity/acceleration threshold of the pointer, and the angle of the finger movement in relation to the screen.

According to another aspect of the present disclosure, the data processing apparatus may comprise and/or may be communicatively coupled to a touchless gesture input system. A touchless gesture input system should be understood as any system which allows a user to interact with the data processing apparatus using gestures, such as hand movements, without requiring the user to touch the computing device for this interaction. The touchless gesture input system may comprise sensing means (also referred to as sensor means), e.g., comprising one or more sensor arrangements and/or one or more sensor devices. The sensing means may be configured to observe at least part of an interaction space and/or to capture movements in an (the) interaction space. The touchless gesture input system may comprise processing means (e.g., comprising software, firmware and/or hardware). The processing means may be configured to detect or determine free-handed, in-air or any other types of gestures performed by the user, or even multiple users, e.g., based on interpreting the captured movements. The processing means may be configured to generate one or more control commands for controlling the data processing apparatus or one or more functions thereof, for causing display of information on the display means, and/or any other type of relevant function. An interaction space should be understood as comprising or being a 3D space in the nearfield of the data processing apparatus in which the user may provide touchless user input.

According to another aspect of the present disclosure, display means may be configured to convey visual information to the user, such as by displaying graphical user interfaces. The display means may be an electronic visual display, also referred to as a screen, in particular a flat-panel screen. The display may be an electroluminescent (EL) display, a liquid crystal display (LCD), a light-emitting diode (LED) display, such as an organic light-emitting diode (OLED) display or active-matrix organic light-emitting diode (AMOLED) display, a plasma (P) display, a quantum dot (QD) display, a microLED display, a retina display, an e-ink display or any other suitable display or display stack. A projection system is another example of a display or display means which uses light to project an image onto a projection surface such as a screen or wall. A display configured to display three-dimensional content, such as a spatial reality display and/or a holographic display, is another example of a display, as will be described in more detail further below. When the display means is configured to display three-dimensional content, the display means may also be referred to as 3D display. A 3D display should be understood as any display capable of conveying depth to the viewer. One example of a 3D display is a stereoscopic display which produces a basic 3D effect by means of stereopsis. However, stereoscopic displays can cause eye strain and visual fatigue. Other examples of a 3D display are a light field display and a holographic display, which typically produce a more realistic 3D effect by combining stereopsis and accurate focal length for the displayed content. These types of 3D displays may cause less visual fatigue than classical stereoscopic displays. As non-limiting examples, holographic displays as provided by the companies Looking Glass Factory Inc. (called Looking Glass), Leia Inc. or Sony Corporation (called Sony Spatial Realty Display) could be used. This way, three-dimensional content can be viewed by the user, which may create a particularly immersive user experience when combined with three-dimensional touchless gesture control, as will be explained in more detail below.

According to another aspect of the present disclosure, the data processing apparatus, in particular the touchless gesture input system, in particular the processing means thereof (see further above), is configured to enter or activate one of a plurality of touchless gesture input modes. The entering of one of the plurality of touchless gesture input modes may be based at least in part on a position of at least one hand of the user relative to the data processing apparatus. This way, a suitable touchless gesture input mode can be selected automatically depending on where the at least one hand of the user is currently located. Different exemplary hand locations will become apparent from the following discussion of exemplary modes.

The plurality of touchless gesture input modes may include a first mode in which at least part of a hand of the user is resting in a typing posture. In this mode, the user may use one or more fingers of the hand to perform a touchless gesture input, for example by moving the one or more fingers, in particular the index finger, to cause a manipulation of a pointer displayed on the display. This mode allows for a particularly efficient switching between touchscreen inputs and touchless gesture inputs, e.g., while typing on a virtual keyboard or otherwise manipulating controls displayed on the touchscreen.

The plurality of touchless gesture input modes may include a second mode in which at least a part of a hand of the user, in particular a palm or portion thereof, is resting on a palmrest region (such as the palmrest region described elsewhere in the present disclosure) associated with the data processing apparatus. In this mode, the user may use one or more fingers of the hand to perform a touchless gesture input, for example by moving the one or more fingers, in particular the index finger, to cause a manipulation of a pointer displayed on the display. At the same time, the palm of the user's hand may rest on the palmrest region, e.g., on a right-sided part thereof when the user's hand is the right hand, which may enable a particularly ergonomic way of touchless gesture input.

The plurality of touchless gesture input modes may include a third mode in which at least a part of a hand of the user, in particular the entire hand, is arranged next to the data processing apparatus. In this mode, the hand may be resting on a surface such as a tabletop on which the portable laptop is located. In this mode, the user may perform touchless gestures to emulate manipulation of a physical input device, such as a computer mouse, as e.g., disclosed in European patent application no. 23165743.8 titled "EMULATION OF A PHYSICAL INPUT DEVICE FOR TOUCHLESS CONTROL OF A COMPUTER DEVICE", the contents of which are incorporated herein by reference.

The plurality of touchless gesture input modes may include a fourth mode in which a hand of the user is arranged near the display means without touching the data processing apparatus. In this mode, the user may perform touchless gestures while the user's hand is in the air, i.e., not in contact with any portion of the data processing apparatus. This may include pointing gestures to control a pointer displayed on the display, gestures for manipulating 3D objects displayed on the display, or the like.

It should be understood that the numbering of the above-described modes (first, second, third, fourth) is made simply for identifying such modes in the present disclosure but is not meant to imply any sequence, nor a certain sub-combination or minimum or maximum number of modes.

According to another aspect of the present disclosure, the determined touchless gesture inputs comprise a pointing gesture, wherein determining the pointing gesture causes a manipulation of the pointer displayed on the display means. The touchless gesture control, in particular in the three-dimensional interaction space, enables a direct user interaction with the pointer by simply pointing towards the display or in the general direction thereof, leading to a particularly intuitive, natural and immersive user experience.

According to another aspect of the present disclosure, a data processing apparatus is provided. The data processing apparatus may comprise means for carrying out any of the methods disclosed herein.

The data processing apparatus may be a computing device, more particularly a personal computer.

The data processing apparatus may be a portable computer. Generally speaking, a portable computer may also be referred to as a laptop computer, a notebook computer, or in short as a laptop or a notebook. A portable computer is to be understood as a computer designed to be relatively easily moved from one place to another, as opposed to stationary computers designed to remain at a single location such as desktops, workstations and server racks. A portable computer is typically a portable personal computer (PC), while touchscreen-based handheld devices such as tablets, phablets and smartphones are called mobile devices instead. The portable computer may be configured to run on a desktop operating system such as Microsoft Windows, macOS or Linux, unlike mobile devices which typically run on mobile operating systems such as Android or iOS.

If the data processing apparatus of aspects of the present disclosure is a portable computer, the portable computer may comprise a base housing, in particular a base housing without a physical computer keyboard. The base housing may comprise a touchscreen. The touchscreen may be arranged on a user-facing surface of the base housing. The portable computer may comprise a top cover. The top cover may be flexibly coupled to the base housing. The top cover may comprise a display. The display may be arranged on a user-facing surface of the top cover. The portable computer may comprise a touchless gesture input system. The portable computer may be designed as described in in European patent application no. 23173257.9 titled "PORTABLE COMPUTER WITH VIRTUALIZED HUMAN-MACHINE INTERFACE", the contents of which are incorporated herein by reference.

According to another aspect of the present disclosure, the data processing apparatus comprises a voice input system. The voice input system may comprise an audio input device such as a microphone and/or audio input processing means, which may be implemented in software. The audio input means may be configured for converting spoken language into text.

According to another aspect of the present disclosure, the touchless gesture input system comprises sensing means configured to observe at least part of an interaction space, in particular at least part of the (three-dimensional) interaction space mentioned above. The sensing means may in principle comprise any sensor technology. In one particular aspect of the present disclosure, the sensing means comprises at least a first and a second sensor arrangement. The first and the second sensor arrangements may be respectively arranged at or near opposing upper corners of the top cover. Exemplary sensor arrangements are disclosed in European patent application no. 23165748.7 titled "SENSOR ARRANGEMENT FOR TOUCHLESS CONTROL OF A COMPUTER DEVICE, SENSOR SYSTEM AND ELECTRONIC DEVICE" and European patent application no. 23165755.2 titled "", the contents of which are incorporated herein by reference. Techniques for providing a touchless input interface using multiple sensor devices are disclosed in EP 4 083 757 A1 titled "TOUCHLESS INPUT INTERFACE FOR AN ELECTRONIC DISPLAY USING MULTIPLE SENSORS", the contents of which are incorporated herein by reference.

According to another aspect of the present disclosure, a computer program is provided. The computer program may comprise instructions which, preferably when the program is executed by the data processing apparatus according to any one of the aspects disclosed herein, cause the data processing apparatus to carry out any one of the methods disclosed herein, or parts thereof. The computer program may be provided as software and/or firmware executable on the data processing apparatus. The computer program may be provided as a distinct product, e.g., for download from a server, app store, or the like or on a non-transitory storage medium. The computer program may be provided as part of the data processing apparatus, i.e., it may be (pre)installed on the data processing apparatus. The computer program may execute at least some of the functions remotely with respect to the data processing apparatus, such as on a computing device connected to the data processing apparatus via a wired or wireless network connection.

The data processing apparatus, methods and/or computer programs may comprise and/or provide an application programming interface (API). The API may be configured for allowing an external application and/or device to use the computer program, such as by invoking an executing of one or more functions and/or by receiving responses. Examples of an external application include without limitation an operating system or an application executing on the processing apparatus. Examples of an external device include without limitation a sensor device and/or a component of the processing apparatus such as the touchscreen, touchless gesture input system, or the like.

While various examples of a processing apparatus have been described, aspects of the present disclosure which have been described above and which will be further exemplified below may be provided in alternative devices, including without limitation any type of data processing apparatus, electronic device, computing device, personal computer (PC), stationary computer (e.g., workstation, desktop, server rack), special-purpose device (e.g., gaming console, set-top-box), handheld device, mobile device (e.g., tablet, phablet, smartphone) or electronic device embedded in a technical device or system (e.g., car, machine). This applies to individual aspects disclosed herein as well as to particular combinations of the aspects disclosed herein.

Lastly, also computerized special-purpose devices are becoming more and more popular, one example being the Airframe developed by the applicant, a device which allows touchless gesture interaction with large-format screens up to LED walls or large-scale projections.

### BRIEF DESCRIPTION OF THE DRAWINGS

The disclosure may be better understood by reference to the following drawings:
- Fig. 1a-d:: Schematic views of computer devices in accordance with exemplary embodiments of the disclosure.
- Fig. 2a-d:: Conceptual representations of pointer movement settings in accordance with exemplary embodiments of the disclosure.
- Fig. 3a:: A schematic view of a first hand posture for moving a pointer on a display with touchless finger pointing in accordance with embodiments of the disclosure.
- Fig. 3b:: A schematic view of a second hand posture for moving a pointer on a display with touchless finger pointing in accordance with embodiments of the disclosure.
- Fig. 4:: Touchless pointer operating modes in accordance with embodiments of the disclosure.
- Fig. 5a:: A top view of a first bounding area and a second bounding area in one exemplary embodiment of the disclosure.
- Fig. 5b:: A perspective view of the Precision Push mode in accordance with an embodiment of the disclosure.
- Fig. 5c:: A perspective view of the Precision Pull mode in accordance with an embodiment of the disclosure.
- Fig. 5d:: A perspective view of a special configuration of the Precision Pull mode in accordance with an embodiment of the disclosure.
- Fig. 6:: An exemplary graphical user interface with slider controls for pointer movement settings in accordance with an embodiment of the disclosure.

### DETAILED DESCRIPTION

In the following, representative embodiments illustrated in the accompanying drawings will be explained. It should be understood that the illustrated embodiments and the following descriptions refer to examples which are not intended to limit the embodiments to one preferred embodiment.

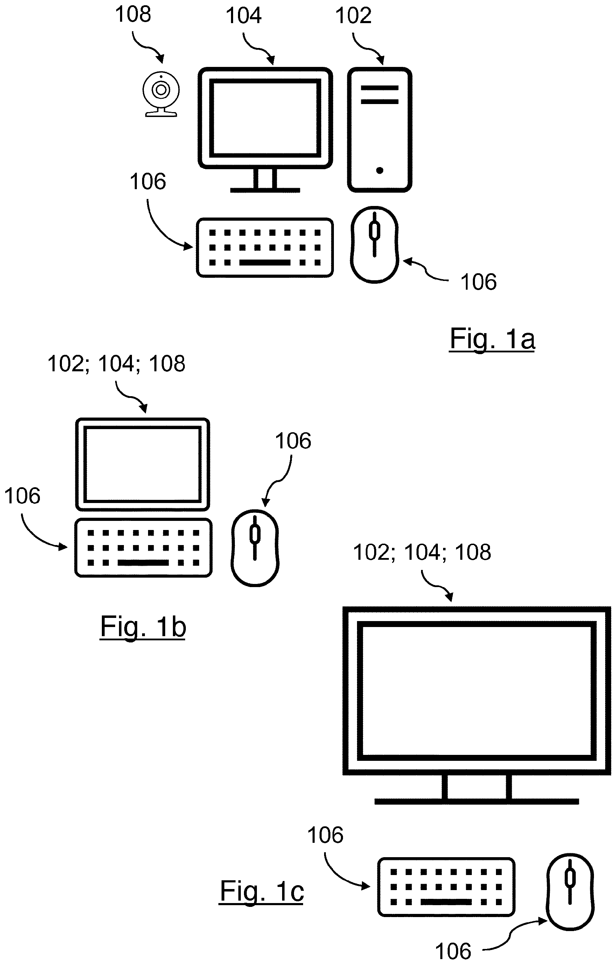

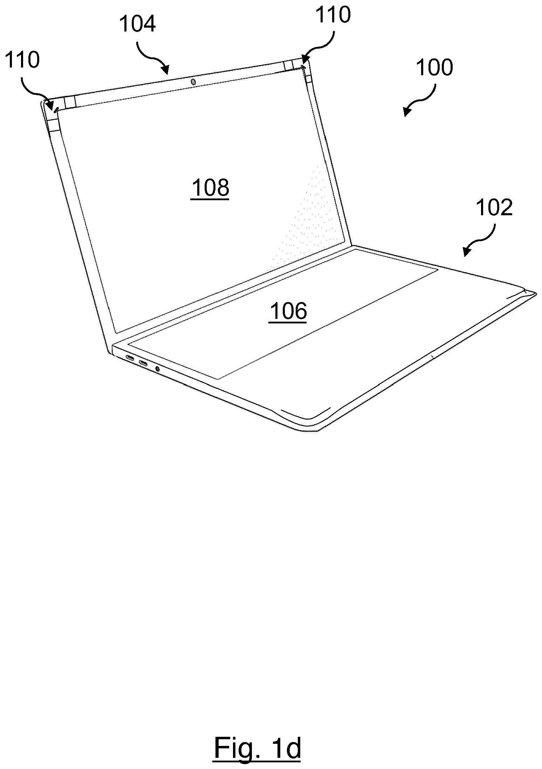

In the following, exemplary embodiments of computer devices in which aspects of the present invention may be practiced will be explained with reference to Figs. 1a-d. Fig. 1a illustrates an embodiment 100a in which the computer device 102 is a personal computer. The computer 102 is coupled to a display means 104 in the form of a computer monitor, to a keyboard 106 and to sensor means 108. Fig. 1b illustrates an embodiment 100b. Embodiment 100b differs from embodiment 100a in that the computer device 102 is a tablet with integrated display means 104 and sensor means 108. Fig. 1c illustrates an embodiment 100c in which the computer device 102 is integrated into a television set which also comprises the display means 104 and the sensor means 108. Fig. 1d illustrates an embodiment 100d in which the computer device is a portable computer 102. The portable computer 102 comprises a base housing 102a and a top cover 102b. The portable computer 102 is open, thereby revealing respective user-facing surfaces of the base housing 102a and top cover 102b. A display means 104 is arranged on the user-facing surface of the top cover 102b. A keyboard 106 is arranged on the user-facing surface of the base housing 102a. The portable computer 102 comprises sensor means 108 as part of a touchless gesture input system, which comprises in the illustrated embodiment first and second sensor devices which are arranged at or near opposing upper corners of the top cover 102b. However, the touchless gesture input system may comprise other sensor arrangements. In one variation of the embodiment 100d of Fig. 1d, the keyboard 106 is replaced with a touchscreen 106, and hence the portable computer 102 resembles the type disclosed in European patent application no. 23173257.9 titled "PORTABLE COMPUTER WITH VIRTUALIZED HUMAN-MACHINE INTERFACE", the contents of which are incorporated herein by reference. It should be mentioned that the concepts disclosed herein may also be practiced in other embodiments in various configurations, e.g., with integrated or external display means 104, keyboards 106 and/or sensor means 108.

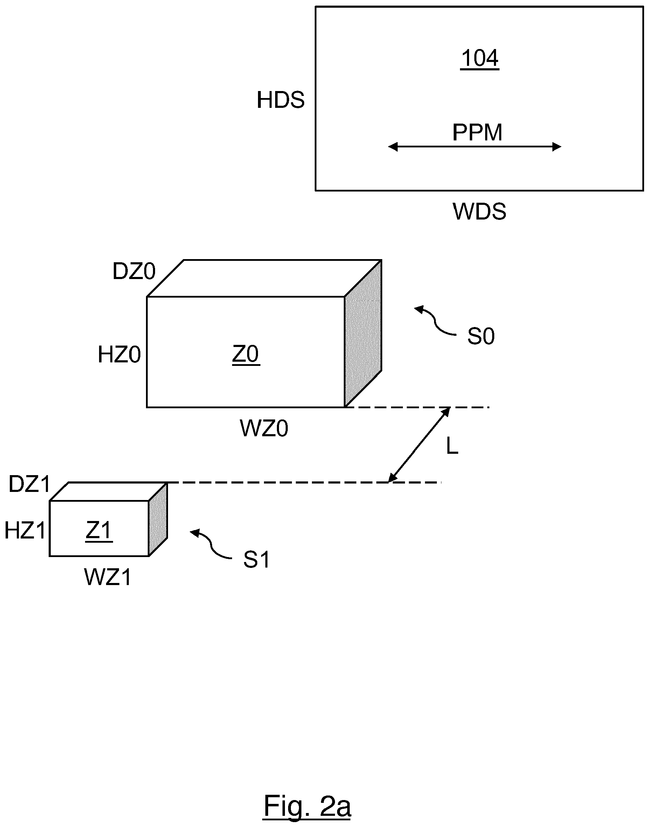

Figs. 2a-d illustrate various conceptual representations of pointer movement settings in accordance with exemplary embodiments of the invention, which will now be described.

As can be seen in Fig. 2a, the display means 104 has a width WDS and a height HDS. The display means 104 may be in a typical display format, such as 16:9, for instance. Fig. 2a also shows a first bounding area Z1 and a second bounding are Z0. The first bounding area Z1 is arranged proximally, i.e., closer to the user, and the second bounding area Z0 is arranged distally, i.e., closer to the display means 104.

The first bounding area Z1 has a width WZ1, a height HZ1 and a depth DZ1. A relationship, or ratio, between the width WZ1 and height HZ1 of the fist bounding area Z1 and the width WDS and height HDS of the display means 104 define a first pointer sensitivity S1. For example, if the width WZ1 and height HZ1 of the fist bounding area Z1 would be rather large, almost equal to the width WDS and height HDS of the display means 104, the pointer sensitivity S1 would be such that the pointer essentially mimics the finger movement. If, on the other hand, the width WZ1 and height HZ1 of the fist bounding area Z1 would be very small as compared to the width WDS and height HDS of the display means 104, the pointer sensitivity S1 would be such that the pointer is rather "jumpy".

The second bounding area Z0 has a width WZ0, a height HZ0 and a depth DZ0. A relationship, or ratio, between the width WZ0 and height HZ0 of the second bounding area Z0 and the width WDS and height HDS of the display means 104 define a second pointer sensitivity S0, similar to the first pointer sensitivity S1 of the first bounding area Z1.

The first pointer sensitivity S1 is constant within the first bounding area Z1, i.e., when the finger moves in z-direction through the z-extension DZ1 of the first bounding area Z1. The second pointer sensitivity S0 is constant within the second bounding area Z0, i.e., when the finger moves in z-direction through the z-extension DZ0 of the second bounding area Z0. When the finger moves in the space between the first bounding area Z1 and the second bounding area Z0, i.e., through the space defined by the distance L, the pointer sensitivity changes continuously between the first pointer sensitivity S1 and the second sensitivity S0.

In Fig. 2a, the first bounding area Z1 has a smaller width WZ1 and height HZ1 than the second bounding area Z0, which means that the pointer sensitivity behaves according to the Precision Pull mode.

Fig. 2a also shows a parameter referred to as pointer pace multiplicator PPM, which may be an additional factor for influencing the relationship between the finger movement and the pointer movement.

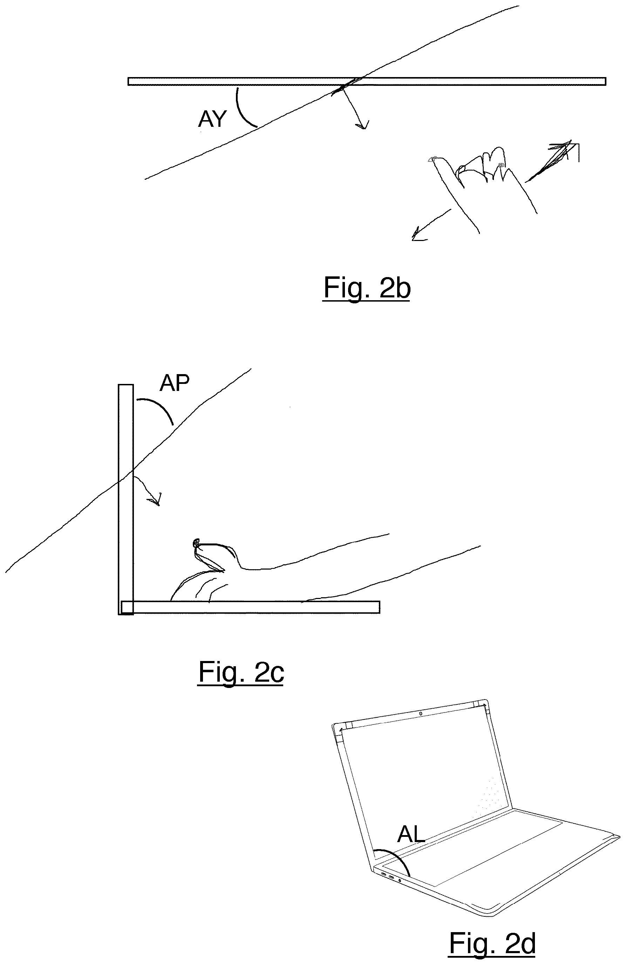

Fig. 2b shows a yaw angle AY of a finger movement plane relative to the display means 104. The yaw angle AY may be set to take account of the fact that many users do not hold their hand perfectly perpendicular to the display means 104 when pointing, but rather in a more or less slightly angled orientation.

Fig. 2c shows a pitch angle AP of the finger movement plane relative to the display means 104. The pitch angle AP may be set to take account of the fact that the index finger is not the closest finger to the display means 104 when typing for some users, as indicated in Fig. 2c.

Fig. 2d shows an opening angle AL of the data processing apparatus 102 when the data processing apparatus 102 is a portable computer.

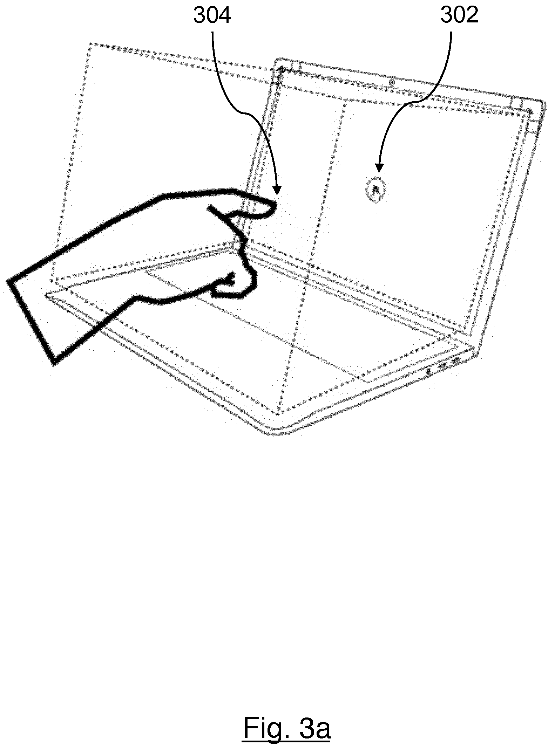

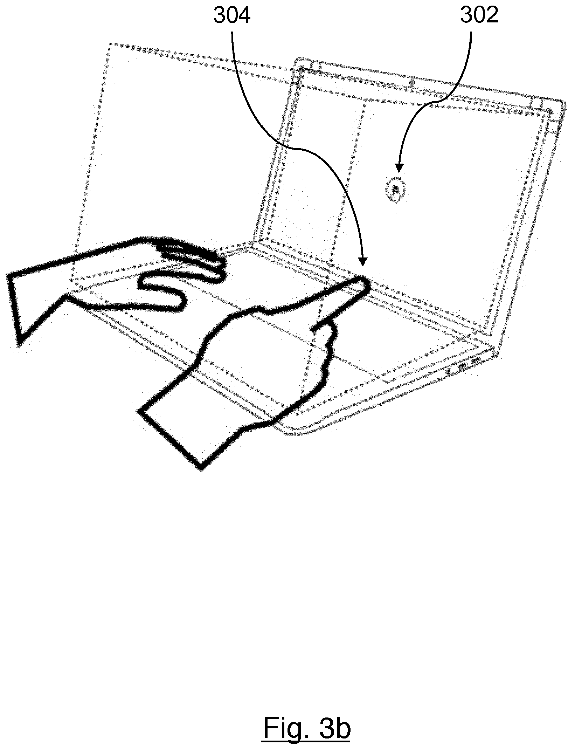

Fig. 3a shows a so-called "Point and Click" posture in which the user holds the hand free in the air. However, this is only one example, and the user may take part in the concepts described in the present disclosure through other hand postures, such as resting a palm of the hand on a palmrest section of the laptop 102, as shown in Fig. 3b, just as one example. In either posture, the pointer movement settings described above influence the relationship between movements of the finger 304 and the pointer 302.

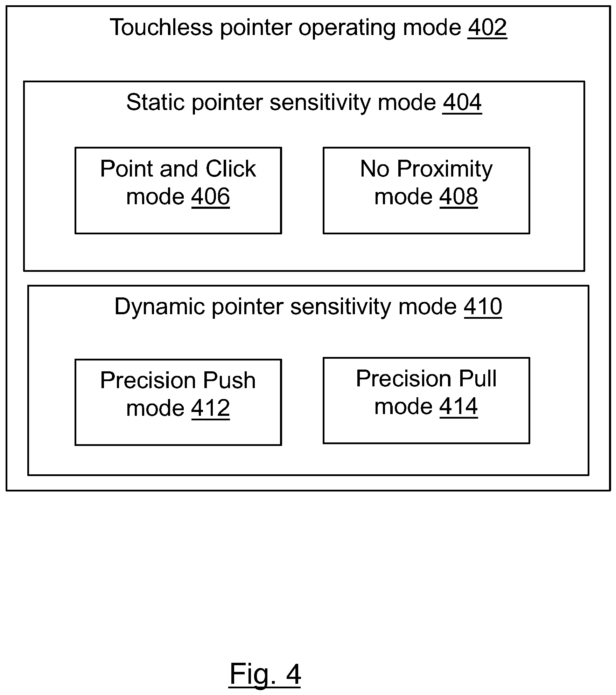

Fig. 4 shows exemplary touchless pointer operating modes 402 which can be obtained by combining any of the pointer movement settings described above. As can be seen in Fig. 4, this includes static pointer sensitivity modes 404 such as a Point and Click mode 406 and a No Proximity mode 408, and dynamic pointer sensitivity modes 410 such as a Precision Push mode 412 and a Precision Pull mode 414.

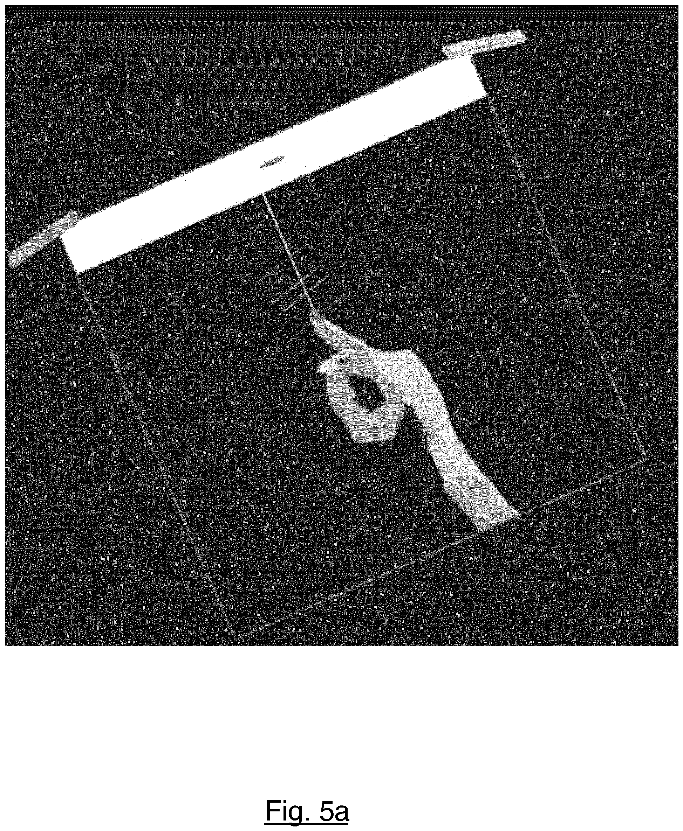

Fig. 5a shows a top view of the first bounding area Z1 and the second bounding area Z0 in one exemplary embodiment. In the illustrated embodiment, first bounding area Z1 extends between the two lower (more proximal) lines, and the second bounding area Z0 extends between the two upper (more distal) lines. When the touchless pointer control is activated, the lowest (most proximal) line, i.e., the lower (proximal) border of the first bounding area Z1 may be set to lie on the fingertip. When the fingertip moves laterally, i.e., in x- and/or y-direction, beyond the border of the bounding area in which the fingertip is currently located, the bounding areas Z1 and Z0 will move with the finger movement, i.e., the fingertip will stay within the bounding area. When the fingertip moves in z-direction, it can move from one bounding area to the other.

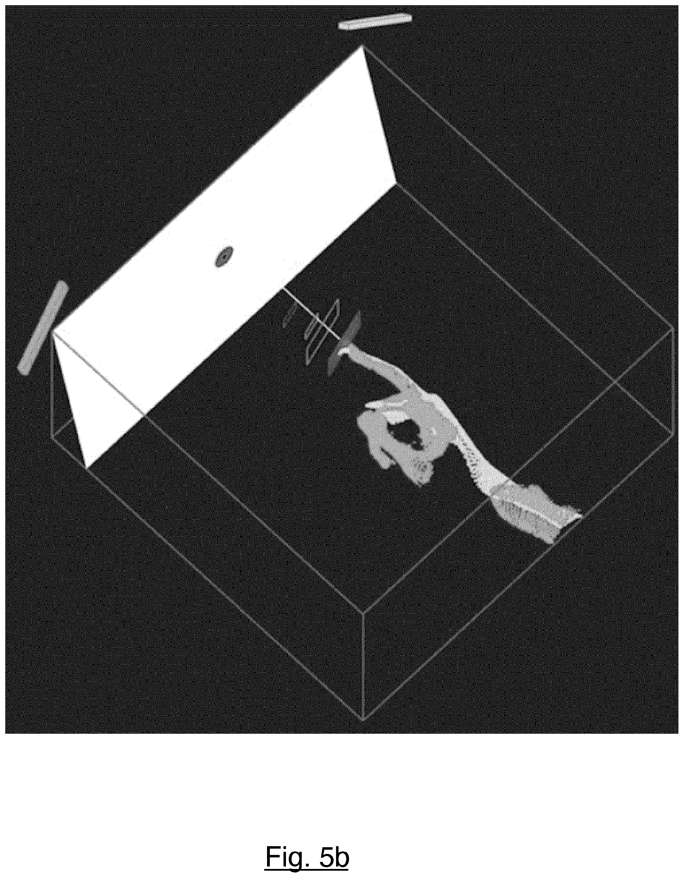

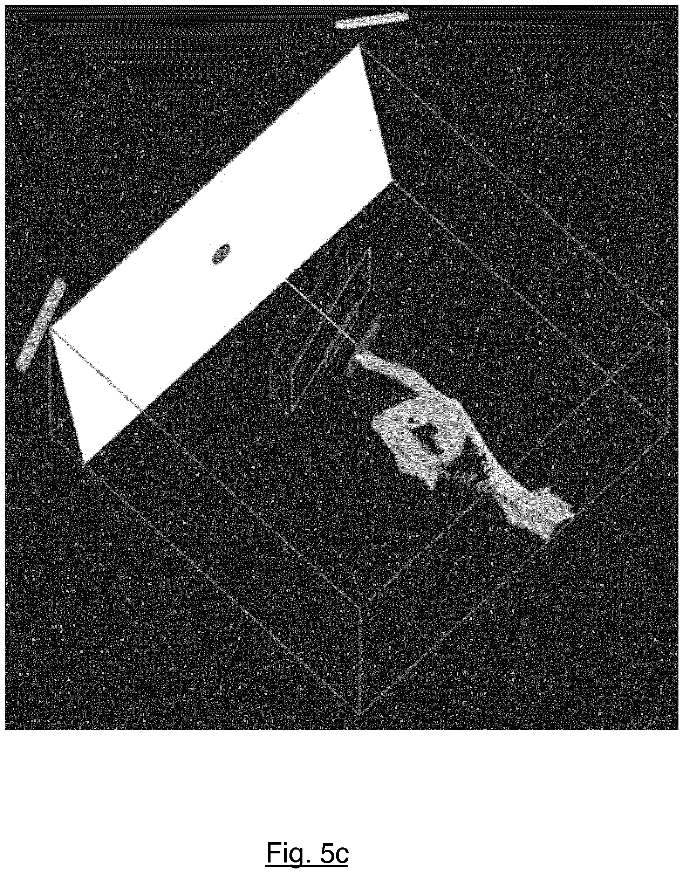

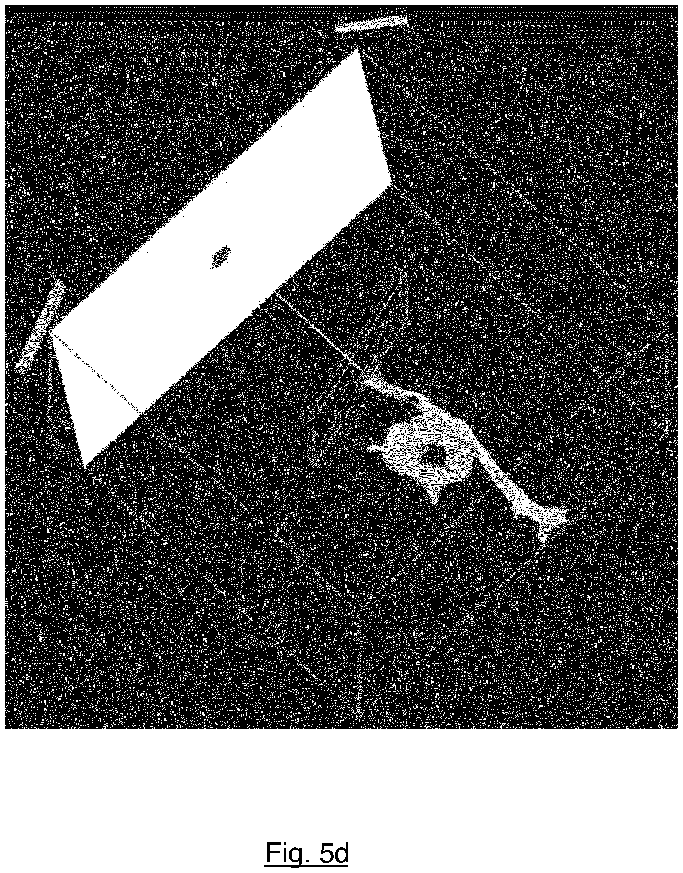

Fig. 5b shows a perspective view of one embodiment of the Precision Push mode 412. Fig. 5c shows a perspective view of one embodiment of the Precision Pull mode 414. Fig. 5d shows a special configuration of the Precision Pull mode 414 in accordance with an exemplary embodiment. In this configuration, the depth value DZ1 and DZ0 of the bounding areas and the distance L between the bounding areas has been set to comparatively small values, which results in a very precise pointer control.

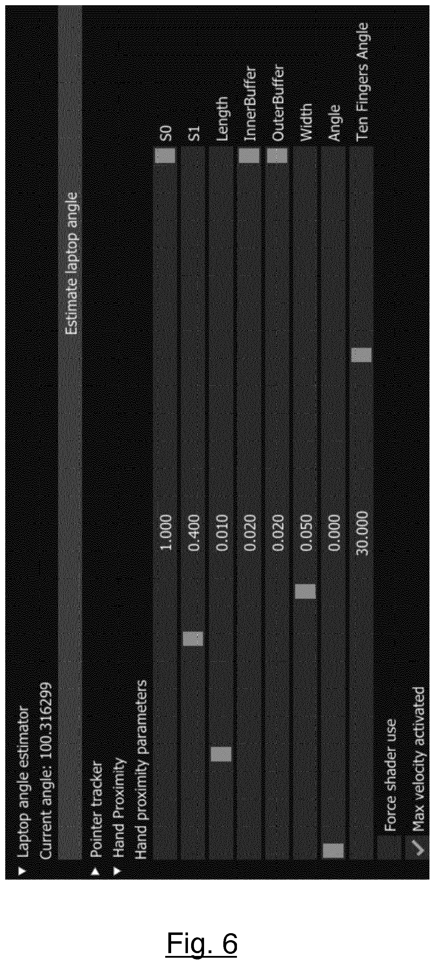

Fig. 6 shows an exemplary graphical user interface with slider controls for the various pointer movement settings described herein.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Embodiments of the present disclosure may be implemented on a computer system. The computer system may be a local computer device (e.g., personal computer, laptop, tablet computer or mobile phone) with one or more processors and one or more storage devices or may be a distributed computer system (e.g., a cloud computing system with one or more processors and one or more storage devices distributed at various locations, for example, at a local client and/or one or more remote server farms and/or data centers). The computer system may comprise any circuit or combination of circuits. In one embodiment, the computer system may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), or any other type of processor or processing circuit. Other types of circuits that may be included in the computer system may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system may include one or more storage devices, which may include one or more memory elements suitable to the particular application, such as a main memory in the form of random-access memory (RAM), one or more hard drives, and/or one or more drives that handle removable media such as compact disks (CD), flash memory cards, digital video disk (DVD), and the like. The computer system may also include a display device, one or more speakers, and a keyboard and/or controller, which can include a mouse, trackball, touch screen, voice-recognition device, or any other device that permits a system user to input information into and receive information from the computer system.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the present disclosure can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the present disclosure comprise a data carrier having electronically readable control signals, which are capable of cooperating with a programmable computer system, such that one of the methods described herein is performed.

Generally, embodiments of the present disclosure can be implemented as a computer program product with a program code, the program code being operative for performing one of the methods when the computer program product runs on a computer. The program code may, for example, be stored on a machine-readable carrier.

Other embodiments comprise the computer program for performing one of the methods described herein, stored on a machine-readable carrier.

In other words, an embodiment of the present disclosure is, therefore, a computer program having a program code for performing one of the methods described herein, when the computer program runs on a computer.

A further embodiment of the present disclosure is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitory. A further embodiment of the present disclosure is an apparatus as described herein comprising a processor and the storage medium.

A further embodiment of the present disclosure is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the present disclosure comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

## Claims

1. A touchless user interface control method (300) for a data processing apparatus (102), wherein the data processing apparatus (102) comprises and/or is communicatively coupled to display means (104), the method comprising:
providing (302) a plurality of touchless pointer operating modes (402), wherein each touchless pointer operating mode (402) determines one or more pointer movement settings;
determining (304) a free-space finger movement of at least one finger (304) of a user;
and
generating (306) at least one control command to cause a pointer movement of a pointer (302) displayed on the display means (104) based on the finger movement;
wherein a relationship between the finger movement and the pointer movement is determined by a current touchless pointer operating mode (402) of the plurality of touchless pointer operating modes (402).

2. The method of claim 1, wherein the one or more pointer movement settings comprise a pointer sensitivity;
wherein the pointer sensitivity determines at least one factor of the relationship between the finger movement and the pointer movement, in particular the relationship between a leftward, rightward, upward and/or downward finger movement and a leftward, rightward, upward and/or downward pointer movement.

3. The method of claim 2, wherein the plurality of touchless pointer operating modes (402) comprises at least one touchless pointer operating mode (404) in which the pointer sensitivity is static and/or independent of a distance between the finger (304) and the display means (104).

4. The method of any one of the preceding claims 2-3, wherein the plurality of touchless pointer operating modes (402; 404) comprises a first pointer operating mode (406) in which the pointer sensitivity is such that the finger movement causes an essentially equal pointer movement.

5. The method of any one of the preceding claims 2-4, wherein the plurality of touchless pointer operating modes (402; 404) comprises a second pointer operating mode (408) in which the pointer sensitivity is such that the finger movement causes a pointer movement which is greater than the finger movement.

6. The method of any one of the preceding claims 2-5, wherein the plurality of touchless pointer operating modes (402) comprises at least one touchless pointer operating mode (410) in which the pointer sensitivity is dynamic and/or can change.

7. The method of claim 6, wherein the pointer sensitivity changes based on a distance between the finger (304) and the display means (104).

8. The method of claim 6 or 7, wherein the pointer sensitivity can change between a plurality of pointer sensitivities comprising or consisting of a first pointer sensitivity (S1) and a second pointer sensitivity (S0);
wherein the first pointer sensitivity (S1) applies while the finger movement takes place within a first bounding area (Z1) and the second sensitivity (S0) applies while the finger movement takes place in a second bounding area (Z0) arranged between the first bounding area (Z1) and the display means (104).

9. The method of claim 9, wherein the pointer sensitivity changes continuously between the first pointer sensitivity (S1) and the second sensitivity (S0) while the finger movement takes place between the first bounding area (Z1) and the second bounding area (Z0).

10. The method of any one of the preceding claims 7-9, wherein the plurality of touchless pointer operating modes (402; 410) comprises a third pointer operating mode (412) in which the second pointer sensitivity (S0) causes, for a given finger movement, a pointer movement which is greater than a pointer movement according to the first pointer sensitivity (S1) for the given finger movement.

11. The method of any one of the preceding claims 7-10, wherein the plurality of touchless pointer operating modes (402; 410) comprises a fourth pointer operating mode (414) in which the second pointer sensitivity (S0) causes, for a given finger movement, a pointer movement which is smaller than a pointer movement according to the first pointer sensitivity (S1) for the given finger movement.

12. The method of any one of the preceding claims, wherein the one or more pointer movement settings comprise one or more of:
- at least one dimension of a first bounding area (Z1) in which the finger movement can take place, including a width (WZ1), height (HZ1) and/or depth (DZ1) of the first bounding area (Z1);
- at least one dimension of a second bounding area (Z0) in which the finger movement can take place, including a width (WZ0), height (HZ0) and/or depth (DZ0) of the second bounding area (Z0);
- a distance (L) between the first bounding area (Z1) and the second bounding area (Z0);
- a pointer pace multiplicator (PPM);
- a yaw angle (AY) of a finger movement plane relative to the display means (104);
- a pitch angle (AP) of the finger movement plane relative to the display means (104);
- an opening angle (AL) of the data processing apparatus (102) when the data processing apparatus (102) is a portable computer;
- a maximum pointer velocity threshold.

13. The method of any one of the preceding claims, further comprising:
determining a pointer movement characteristic including one or more of a speed of the pointer, an acceleration of the pointer and a velocity of the pointer;
entering a click mode in response to the pointer movement characteristic;
generating a control command to cause a click event based on a predetermined finger movement.

14. A data processing apparatus (102) comprising means for carrying out the method of any one of claims 1-13.

15. A computer program or a computer-readable medium having stored thereon the computer program, the computer program comprising instructions which, when the computer program is executed by a data processing apparatus (102), cause the data processing apparatus (102) to carry out the method of any one of claims 1-13.
